# EUROPÄISCHE PATENTSCHRIFT

(11) **EP 1 396 393 B1**
(45) Veröffentlichungstag und Bekanntmachung des Hinweises auf die Patenterteilung: **24.12.2008**
(21) Anmeldenummer: 03090278.7
(22) Anmeldetag: 01.09.2003
(51) Int. Cl.: B60R 21/20

(54) **Airbag-Einheit für Kraftfahrzeuge**
Airbag module for vehicles
Module de coussin gonflable pour véhicules

(30) Priorität: 04.09.2002 DE 10241622
(43) Veröffentlichungstag der Anmeldung: 10.03.2004
(73) Patentinhaber: Takata-Petri AG, 63743 Aschaffenburg (DE)
(72) Erfinder: Fuchs, Stefan, 63773 Goldbach (DE); Bartholomäus, Ralf, 63864 Glattbach (DE)
(74) Vertreter: Baumgärtel, Gunnar

(56) Entgegenhaltungen:
- US-A- 4 943 027
- US-A- 5 730 459
- US-A- 5 826 901
- US-A- 6 095 549

## Beschreibung

Die Erfindung betrifft eine Airbageinheit für Kraftfahrzeuge gemäß dem Oberbegriff des Anspruchs 1.

Airbageinheiten werden in Kraftfahrzeugen zur Erhöhung der passiven Sicherheit und zur Verbesserung des Fahrzeuginsassenschutzes verwendet. Die Airbageinheiten weisen dabei im Allgemeinen einen Gassack und einen Gasgenerator zum Befüllen des Gassackes mit einem Füllgas auf. Zur Verwendung in Airbageinheiten sind unterschiedliche Arten von Gasgeneratoren bekannt, insbesondere auch Rohrgasgeneratoren, bei denen das Gasgeneratorgehäuse rohrförmig ausgebildet ist. Diese Rohrgasgeneratoren haben den Vorteil, dass sie sehr schlank ausgebildet sind und daher in der Rohrdurchschnittsrichtung ein geringes Baumaß aufweisen. Bei einem stehenden Einbau des Rohrgasgenerators, bei dem die Rohrachse in Richtung des Fahrzeuginnenraums zeigt, wird ein besonders günstiges Einbaumaß in der ohnehin begrenzten Fläche des Armaturenbretts erreicht.

Problematisch bei einem stehenden Einbau eines Rohrgasgenerators ist, dass der Rohrgasgenerator selbst ein Verletzungsrisiko in sich birgt, da er ein hervorstehendes fahrzeugfestes Teil ist. Für derartige fahrzeugfeste Teile, die an den Fahrzeuginnenraum anschließen, bestehen gesetzlich vorgegebene Grenzwerte für die Beschleunigung, die von den Teilen beispielsweise bei einem Kopfaufprall auf den Kopf ausgeübt werden darf. Im Armaturenbereich angeordnete Teile müssen daher ein definiertes Deformationsverhalten aufweisen, um diese Grenzwerte erfüllen zu können. Rohrgasgeneratoren sind aber aufgrund der ihnen zukommenden Funktion der Erzeugung eines Druckgases nicht im erforderlichen Maße deformationsfähig.

Die US 5,730,459 beschreibt eine Airbageinheit für Kraftfahrzeuge mit einem in einem Lenkrad angeordnetem Topfgasgenerator. Der Topfgasgenerator ist dabei in Richtung der Lenkachse des Lenkrades verschiebbar. In einem Crashfall wird die Verschiebung des Topfgasgenerator dadurch erzielt, dass ein an der Airbageinheit befindliches Deformationselement deformiert wird.

Aufgabe der vorliegenden Erfindung ist es, eine Airbageinheit für Kraftfahrzeuge mit einem Rohrgasgenerator anzugeben, die die Verletzungsgefahr für einen Kraftfahrzeuginsassen im Aufprallfall verringert.

Die Aufgabe wird durch eine Airbageinheit für Kraftfahrzeuge mit den Merkmalen des Anspruchs 1 gelöst.

Demgemäss weist die Airbageinheit für Kraftfahrzeuge einen an einer Kraftfahrzeugstruktur angebundenen Rohrgasgenerator zur Erzeugung eines Füllgases für einen Gassack auf. Dabei ist der Rohrgasgenerator relativ zu der Kraftfahrzeugstruktur in Richtung seiner Rohrachse verschiebbar und steht mit einem Deformationselement in Wechselwirkung, das bei Einwirkung einer Kraft, die größer oder gleich einer definierten Mindestkraft ist, deformiert wird und eine Verschiebung des Rohrgasgenerators entlang seiner Rohrachse ermöglicht. Erfindungsgemäß ist zur Führung des Rohrgenerators auf einem definierten Verschiebeweg bei einer Verformung des Deformationselementes ein erstes Führungsmittel an einem zur Anbindung des Rohrgasgenerators an die Kraftfahrzeugstruktur vorgesehenen Befestigungselement angeordnet und ein mit dem ersten Führungsmittel in Eingriff stehendes zweites Führungsmittel ist an dem Rohrgasgenerator angeordnet. Dabei ist das Deformationselement derart zwischen dem Befestigungselement und dem Rohrgasgenerator angeordnet, dass der Rohrgasgenerator zwischen einem Anschlag der Führungsmittel des Befestigungselementes und dem Befestigungselement verspannt ist.

Um einen möglichst effizienten Eintrag der Aufprallenergie in das Deformationselement zu ermöglichen, erstreckt sich mindestens eines der Führungsmittel im Wesentlichen in Richtung der Rohrachse des eingebauten Rohrgasgenerators. In einer kostengünstigen Ausgestaltung der Erfindung ist das erste Führungsmittel als Langloch und das zweite Führungsmittel als ein in das Langloch eingreifender Zapfen ausgebildet. Sowohl der Zapfen als auch das Langloch lassen sich einfach an dem Rohrgasgenerator bzw. an dem Befestigungselement anbringen.

Zur weiteren Verminderung der Verletzungsgefahr an hervorstehenden Teilen des Rohrgasgenerators, zeigt in einer Ausführungsform der Erfindung der durch die Führungsmittel definierte Verschiebungsweg im Wesentlichen von einem sich im Fahrzeuginnenraum befindlichen Fahrzeuginsassen weg.

Das Deformationselement dient unter anderem dazu, eine Verschiebung des Rohrgasgenerators gegenüber dem Befestigungselement erst ab Einwirkung einer bestimmten Mindestkraft zu erlauben. Das Deformationselement kann daher derart angeordnet werden, dass eine Verschiebung des Rohrgasgenerators bei einer Krafteinwirkung in Verschiebungsrichtung, die kleiner ist als eine definierte Mindestkraft, verhindert wird. Dadurch wird verhindert, dass im Normalbetrieb des Kraftfahrzeugs der Rohrgasgenerator verschoben wird. Die eigentliche Schutzwirkung kommt daher nur dann zum Tragen, wenn eine einen bestimmten Grenzwert überschreitende Kraft auf den Rohrgasgenerator einwirkt.

Da sich der Gassack zumindest teilweise an dem Rohrgasgenerator abstützt, wird der Verschiebungsweg des Rohrgasgenerators derart begrenzt, dass auch die auf dem Gassack einwirkende Stützkraft von der Kraftfahrzeugstruktur auf den Rohrgasgenerator übertragen werden kann.

Die erfindungsgemäße Airbageinheit bietet einen besonders guten Aufprallschutz, wenn die Rohrachse des eingebauten Rohrgasgenerators im Wesentlichen in Richtung des Kraftfahrzeuginnenraums zeigt, da dann im Aufprallfall die Kräfte im Wesentlichen entlang der Rohrachse des Rohrgasgenerators eingeleitet werden. Man spricht hier auch von einem "stehenden Einbau" des Rohrgasgenerators in das Kraftfahrzeug. In einer Weiterbildung der Erfindung trägt der Rohrgasgenerator ein Gehäuse zur Aufnahme weiterer Komponenten der Airbageinheit, insbesondere einen Diffusor und/oder einen Gassack. Auf diese Weise lässt sich eine kompakte Airbageinheit, in die viele Komponenten integriert sind, herstellen.

Die Erfindung wird im Weiteren anhand der Zeichnung der einzigen Figur erläutert. Es zeigt:

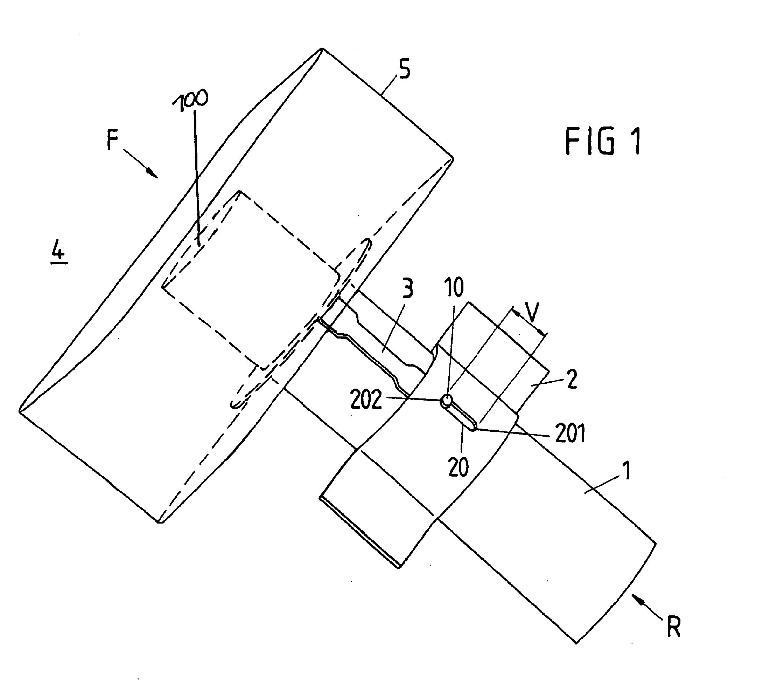

- Fig. 1: - eine erfindungsgemäße Airbageinheit für Kraftfahrzeuge mit einem Rohrgasgenerator und einem Befestigungselement zur Anbindung des Rohrgasgenerators an die Kraftfahrzeugstruktur.

In Figur 1 ist eine erfindungsgemäße Airbageinheit gezeigt. Die Airbageinheit umfasst einen Rohrgasgenerator 1, der in einem Befestigungselement 2, das hier als Befestigungsschelle oder Befestigungsmuffe ausgebildet ist, an der Fahrzeugsstruktur befestigt ist. Der Rohrgasgenerator 1 trägt an seinem einen, einem Kraftfahrzeuginnenraum 4 zugewandten Ende 100 ein Gehäuse 5, das beispielsweise einen hier nicht dargestellten Gassack aufnimmt. In dem Gehäuse 5 kann weiterhin ein hier ebenfalls nicht dargestellter Diffusor zur gleichmäßigen Verteilung des aus dem Rohrgasgenerator 1 ausströmenden Gases in den Gassack vorgesehen sein.

Der Rohrgasgenerator 1 ist in dem Befestigungselement 2 in Richtung seiner Rohrachse R verschiebbar angeordnet. Dies kann beispielsweise dadurch erreicht werden, dass der Außendurchmesser des Rohrgasgenerators 1 einen geringeren Durchmesser aufweist, als der Innendurchmesser des Befestigungselementes 2. An dem Rohrgasgenerator 1 ist ein Zapfen 10 angebracht, der in ein in das Befestigungselement 2 eingelassenes Langloch 20 eingreift. Das Langloch 20 des Befestigungselementes 2 weist einen oberen Anschlag 202 und einen unteren Anschlag 201 auf durch die der mögliche Verschiebeweg V des Rohrgasgenerators 1 begrenzt wird. Der Rohrgasgenerator lässt sich daher auf der durch das Langloch 20 vorgegebenen Bahn zwischen den beiden Anschlägen 201, 202 um einen Verschiebeweg V verschieben.

Zwischen dem Befestigungselement 2 und dem Rohrgasgenerator 1 ist weiterhin ein Deformationselement 3 angeordnet. Das Deformationselement 3 verspannt in der gezeigten Ausführungsform den Rohrgasgenerator 1 gegenüber dem Befestigungselement 2 derart, dass der an dem Rohrgasgenerator 1 angebrachten Zapfen 10 am oberen Anschlag 202 des Langlochs 20 formschlüssig anliegt. Damit ist der Rohrgasgenerator 1 in der einen Verschiebungsrichtung entlang seiner Rohrachse R durch den Anschlag 202 des Langlochs 20 blockiert und in der anderen Verschiebungsrichtung durch das Deformationselement 3 blockiert.

Die in Figur 1 gezeigte Airbageinheit wird derart in ein Kraftfahrzeug eingebaut, dass die das Gehäuse 5 tragende Seite des Rohrgasgenerators 1 in Richtung des Kraftfahrzeuginnenraums 4 zeigt. Damit ist das Gehäuse 5 und auch die entsprechende Stirnfläche 100 des Rohrgasgenerators 1 einem sich im Kraftfahrzeuginnenraum 4 befindlichen Kraftfahrzeuginsassen zugewendet.

Im Falle eines Unfalls wirken hohe Beschleunigungskräfte auf den Kraftfahrzeuginsassen. In einem ungünstigen Falle trifft der Kopf des Kraftfahrzeuginsassen nicht auf einen entfalteten Gassack, sondern auf das Gehäuse 5 oder auf die Stirnseite 100 des Gasgenerators 1 auf. Dabei wird eine Kraft F in Richtung der Rohrachse R des Rohrgasgenerators 1 auf den Rohrgasgenerator 1 ausgeübt. Diese auf die Stirnfläche 100 des Rohrgasgenerators 1 ausgeübte Kraft F deformiert das zwischen dem Rohrgasgenerator 1 und dem Befestigungselement 2 angeordnete Deformationselement 3, wenn die Kraft eine bestimmte Mindestkraft überschreitet. Diese Mindestkraft wird dabei beispielsweise durch gesetzliche Vorgaben definiert. Die von dem auf den Rohrgasgenerator aufprallenden Körperteil des Kraftfahrzeuginsassen in den Rohrgasgenerator 1 eingeleitete Energie wird zum Teil in dem Deformationselement 3 in Deformationsenergie überführt. Der Rohrgasgenerator 1 verschiebt sich daher bei Einwirkung der Kraft F in Richtung seiner Rohrachse R solange, bis der Zapfen 10 in dem Langloch 20 bis an den unteren Anschlag 201 formschlüssig anschlägt. Die Verletzungsgefahr des Kraftfahrzeuginsassen an den hervorstehenden Teilen des Rohrgasgenerators 1 wird so herabgesetzt, da die auftretenden Maximalbeschleunigungen aufgrund der Überführung kinetischer Aufprallenergie in Deformationsenergie herabgesetzt werden.

Die Erfindung beschränkt sich nicht auf das zuvor beschriebene Ausführungsbeispiel. Wesentlich für die Erfindung ist vielmehr, dass eine Airbageinheit für Kraftfahrzeuge mit einem Rohrgasgenerator und mindestens einem Befestigungselement zur Anbindung des Vorgasgenerators an die Kraftfahrzeugstruktur Führungsmittel zur Führung der Verschiebebewegung des Rohrgasgenerators relativ zu dem Befestigungselement aufweist und weiterhin ein Deformationselement zwischen dem Rohrgasgenerator und dem Befestigungselement angeordnet ist, das bei Einwirken einer Kraft, die gleich oder größer einer definierten Mindestkraft ist, deformiert wird und die Verschiebung des Rohrgasgenerators in Verschieberichtung ermöglicht.

## Patentansprüche

1. Airbageinheit für Kraftfahrzeuge mit einem an einer Kraftfahrzeugstruktur angebundenen Rohrgasgenerator zur Erzeugung eines Füllgases für einen Gassack, wobei der Rohrgasgenerator (1) relativ zu der Kraftfahrzeugstruktur in Richtung seiner Rohrachse (R) verschiebbar ist und mit einem Deformationselement (3) in Wechselwirkung steht, das bei Einwirkung einer Kraft (F), die größer oder gleich einer definierten Mindestkraft ist, deformiert wird und eine Verschiebung des Rohrgasgenerators (1) entlang seiner Rohrachse (R) ermöglicht,
**dadurch gekennzeichnet,**
**dass** zur Führung des Rohrgenerators (1) auf einem definierten Verschiebeweg (V) bei einer Verformung des Deformationselementes (3) ein erstes Führungsmittel (20) an einem zur Anbindung des Rohrgasgenerators (1) an die Kraftfahrzeugstruktur vorgesehenen Befestigungselement (2) angeordnet ist und ein mit dem ersten Führungsmittel (20) in Eingriff stehendes zweites Führungsmittel (10) an dem Rohrgasgenerator (1) angeordnet ist und dass das Deformationselement (3) derart zwischen dem Befestigungselement (2) und dem Rohrgasgenerator (1) angeordnet ist, dass der Rohrgasgenerator (1) zwischen einem Anschlag (202) der Führungsmittel (20) des Befestigungselementes (2) und dem Befestigungselement (2) verspannt ist.

2. Airbageinheit nach Anspruch 1, **dadurch gekennzeichnet, dass** sich mindestens eines der beiden Führungsmittel (20) im Wesentlichen in Richtung der Rohrachse (R) des eingebauten Rohrgasgenerators (1) erstreckt.

3. Airbageinheit nach Anspruch 1 oder 2, **dadurch gekennzeichnet, dass** das erste Führungsmittel als Langloch (20) und das zweite Führungsmittel als in das Langloch (20) eingreifender Zapfen (10) ausgebildet ist.

4. Airbageinheit nach einem der Ansprüche 1 bis 3, **dadurch gekennzeichnet, dass** der durch die Führungsmittel (10, 20) definierte Verschiebeweg (V) im Wesentlichen von einem sich im Fahrzeuginnenraum befindlichen Fahrzeuginsassen weg zeigt.

5. Airbageinheit nach einem der Ansprüche 1 bis 4, **dadurch gekennzeichnet, dass** das erste und/oder das zweite Führungsmittel (20) mindestens einen Anschlag (201, 202) zur Begrenzung des Verschiebeweges (V) des Rohrgasgenerators (1) in mindestens einer Richtung aufweist.

6. Airbageinheit nach einem der vorstehenden Ansprüche, **dadurch gekennzeichnet, dass** das Deformationselement (3) derart angeordnet ist, dass eine Verschiebung des Rohrgasgenerators (1) bei einer Krafteinwirkung (F) in Richtung der Rohrachse (R), die kleiner ist als die definierte Mindestkraft, verhindert wird.

7. Airbageinheit nach einem der vorstehenden Ansprüche, **dadurch gekennzeichnet, dass** die Rohrachse (R) des eingebauten Rohrgasgenerators (1) im Wesentlichen in Richtung des Kraftfahrzeuginnenraums (4) zeigt.

8. Airbageinheit nach einem der vorstehenden Ansprüche, **dadurch gekennzeichnet, dass** an dem Rohrgasgenerator (1) ein Gehäuse (5) zur Aufnahme weiterer Komponenten der Airbageinheit, insbesondere einem Diffusor und/oder einem Gassack, angeordnet ist.

## Claims

1. Airbag unit for motor vehicles, with a tubular gas generator, tied to a motor vehicle structure, for generating a filling gas for a gas bag, the tubular gas generator (1) being displaceable in the direction of its tube axis (R) in relation to the motor vehicle structure and being in interaction with a deformation element (3) which, under the action of a force (F) which is greater than or equal to a defined minimum force, is deformed and makes it possible for the tubular gas generator (1) to be displaced along its tube axis (R),
**characterized**
**in that,** for guiding the tubular generator (1) on a defined displacement travel (V) during a deformation of the deformation element (3), a first guide means (20) is arranged on a fastening element (2) which is provided for connecting the tubular gas generator (1) to the motor vehicle structure, and a second guide means (10) which is in engagement with the first guide means (20) is arranged on the tubular gas generator (1), and in that the deformation element (3) is arranged between the fastening element (2) and the tubular gas generator (1) in such a way that the tubular gas generator (1) is braced between a stop (202) of the guide means (20) of the fastening element (2) and the fastening element (2).

2. Airbag unit according to Claim 1, **characterized in that** at least one of the two guide means (20) extends essentially in the direction of the tube axis (R) of the installed tubular gas generator (1).

3. Airbag unit according to Claim 1 or 2, **characterized in that** the first guide means is designed as a long hole (20) and the second guide means as a pin (10) engaging into the long hole (20).

4. Airbag unit according to one of Claims 1 to 3, **characterized in that** the displacement travel (V) defined by the guide means (10, 20) points essentially away from a vehicle occupant located in the vehicle interior.

5. Airbag unit according to one of Claims 1 to 4, **characterized in that** the first and/or the second guide means (20) has at least one stop (201, 202) for limiting the displacement travel (V) of the tubular gas generator (1) in at least one direction.

6. Airbag unit according to one of the preceding claims, **characterized in that** the deformation element (3) is arranged in such a way that a displacement of the tubular gas generator (1) under the action of a force (F) in the direction of the tube axis (R) which is lower than the defined minimum force is prevented.

7. Airbag unit according to one of the preceding claims, **characterized in that** the tube axis (R) of the installed tubular gas generator (1) points essentially in the direction of the motor vehicle interior (4).

8. Airbag unit according to one of the preceding claims, **characterized in that** a housing (5) for receiving further components of the airbag unit, in particular a diffuser and/or a gas bag, is arranged on the tubular gas generator (1).

## Revendications

1. Module d'airbag pour véhicules automobiles, comprenant un générateur de gaz tubulaire attaché à la structure du véhicule et destiné à générer un gaz de remplissage pour un sac à gaz, le générateur de gaz tubulaire (1) étant mobile par rapport à la structure du véhicule en direction de son axe tubulaire (R) et coopérant avec un élément à déformation (3) qui, lors de l'application d'une force (F) supérieure ou égale à une force minimum définie, se déforme et permet un déplacement du générateur de gaz tubulaire (1) le long de son axe tubulaire (R),
**caractérisé en ce que**
pour le guidage du générateur tubulaire (1) sur un trajet de déplacement défini (V) lors d'une déformation de l'élément à déformation (3), un premier moyen de guidage (20) est agencé sur un élément de fixation (2) prévu pour attacher le générateur de gaz tubulaire (1) sur la structure du véhicule, et un deuxième moyen de guidage (10) en engagement avec le premier moyen de guidage (20) est agencé sur le générateur de gaz tubulaire (1), et **en ce que** l'élément à déformation (3) est agencé entre l'élément de fixation (2) et le générateur de gaz tubulaire (1) de telle manière que le générateur de gaz tubulaire (1) est serré entre une butée (202) des moyens de guidage (20) de l'élément de fixation (2) et l'élément de fixation (2).

2. Module d'airbag selon la revendication 1, **caractérisé en ce que** l'un au moins des deux moyens de guidage (20) s'étend sensiblement en direction de l'axe tubulaire (R) du générateur de gaz tubulaire (1) monté.

3. Module d'airbag selon la revendication 1 ou 2, **caractérisé en ce que** le premier moyen de guidage est réalisé sous la forme d'un trou oblong (20) et le deuxième moyen de guidage est réalisé sous forme d'un tenon (10) qui s'engage dans le trou oblong.

4. Module d'airbag selon l'une des revendications 1 à 3, **caractérisé en ce que** le trajet de déplacement (V) défini par les moyens de guidage (10, 20) est orienté sensiblement en éloignement d'un occupant qui se trouve dans l'habitacle intérieur du véhicule.

5. Module d'airbag selon l'une des revendications 1 à 4, **caractérisé en ce que** le premier et/ou le deuxième moyen de guidage (20) comporte au moins une butée (201, 202) pour limiter le trajet de déplacement (V) du générateur de gaz tubulaire (1) dans au moins une direction.

6. Module d'airbag selon l'une des revendications précédentes, **caractérisé en ce que** l'élément à déformation (3) est agencé de telle façon que, lors de l'action d'une force (F), en direction de l'axe tubulaire (R), inférieure à la force minimum définie, un déplacement du générateur de gaz tubulaire (1) est empêché.

7. Module d'airbag selon l'une des revendications précédentes, **caractérisé en ce que** l'axe tubulaire (R) du générateur de gaz tubulaire (1) monté est essentiellement dans la direction de l'habitacle intérieur du véhicule.

8. Module d'airbag selon l'une des revendications précédentes, **caractérisé en ce qu'**un boîtier (5) est agencé sur le générateur de gaz tubulaire (1) pour le logement d'autres composants du module d'airbag, en particulier un diffuseur et/ou un sac à gaz.
